# EUROPÄISCHE PATENTANMELDUNG

(11) **EP 0 676 225 A1**
(43) Veröffentlichungstag der Anmeldung: **11.10.1995**
(21) Anmeldenummer: 95104691.1
(22) Anmeldetag: 30.03.1995
(51) Int. Cl.: B01D 25/21, B01D 35/18

(54) **Filterplatte**

(30) Priorität: 06.04.1994 CH 1006/94
(71) Anmelder: Bertrams Dehydrat AG, 4132 Muttenz (CH)
(72) Erfinder: Aigeldinger, Jean-Claude, CH-5265 Wittnau (CH); Mützenberg, Willy, CH-4566 Kriegstetten (CH); Glanzmann, Robert, CH-2800 Delémont (CH)
(74) Vertreter: EGLI-EUROPEAN PATENT ATTORNEYS

(57) **Zusammenfassung**

Eine Filterplatte aus Metall für eine Kammerfilterpresse umfasst einen Rahmen (2) mit einem oberen Rahmenteil (5a) und einem unteren Rahmenteil (5b), welche exakt gleich sind, ausserdem gleiche Seitenteile (6a, 6b). Besagte Teile sind aus Metallprofilen hergestellt. Der obere Rahmenteil (5a) und der untere Rahmenteil (5b) sind jeweils mit gefrästen oder gebohrten Abzugskanälen (7) und Abzugsbohrungen (8) sowie einem Heizkanal (9) und einer Heizbohrung (11) versehen, welch letztere in einen Hohlraum (3) zwischen zwei vom Rahmen (2) umgebenen Platten (1a, 1b) mündet. Der Hohlraum (3) ist durch Trennwände (12), die abwechselnd links und rechts Durchgänge frei lassen, in einen mäanderförmigen Gang abgeteilt. Der obere Rahmenteil (5a), der untere Rahmenteil (5b) sowie die Seitenteile (6a, 6b) sind untereinander und mit den Platten (1a, 1b) verschweisst. Der Rahmen ist an der Aussenseite von einer Isolationsschicht (13) aus wärmeisolierendem und hitzebeständigem Material umgeben.

Die Filterplatte ist heiz- und kühlbar, sehr einfach und billig herstellbar, mindestens bis 600°C hitzebeständig und mechanisch sehr stabil. Sie eignet sich für Kammerfilterpressen, in denen der Filterkuchen nach der Trennung vom Filtrat einer Kontakttrocknung oder einer Vakuum- oder Gefriertrocknung unterzogen werden soll.

## Beschreibung

Die Erfindung betrifft eine Filterplatte gemäss dem Oberbegriff des Anspruchs 1. Derartige Filterplatten werden in Kammerfilterpressen verwendet, welche dazu dienen, Filtrat aus einer Trübe abzuziehen und von einem in der Presse zurückbleibenden Filterkuchen zu trennen. Kammerfilterpressen werden in sehr vielen Bereichen, von der Pharmakologie über die Lebensmittelherstellung bis hin zur Verarbeitung von Klärschlämmen verwendet.

Es ist eine gattungsgemässe Filterplatte bekannt (DE-A-3 901 851), welche, ähnlich wie bekannte Filterplatten aus Kunststoff, im wesentlichen kreisförmig ausgebildet ist mit einem einstückig hergestellten Rahmen. Solche Filterplatten können zwar aus Kunststoff leicht erzeugt werden, die Herstellung aus Metall ist jedoch schwierig und vor allem sehr teuer. Vor allem für die Kleinserienproduktion von Metallplatten, wie sie im Hochtemperaturbereich erforderlich sind, ist die bekannte Konstruktion schlecht geeignet.

Die Erfindung schafft demgegenüber eine heizbare, hochtemperaturbeständige Filterplatte aus Metall, welche aus wenigen kleineren, leicht herstellbaren oder im Handel günstig erhältlichen Teilen besteht, die einfach miteinander verschweisst sind. Die Filterplatte kann daher einfach und billig in ausgezeichneter Qualität hergestellt werden, selbst bei kleinen Serien. Als weiterer Vorteil ist neben der ausgezeichneten Hochtemperaturbeständigkeit und mechanischen Stabilität, die ein Arbeiten mit Unter- und Ueberdruck erlaubt, anzuführen, dass sie wegen ihrer rechteckigen Form bessere Raumausnützung gewährleistet als die bekannte Filterplatte.

Im folgenden wird die Erfindung anhand von Figuren, welche lediglich Ausführungsbeispiele darstellen, näher erläutert. Es zeigen
- Fig. 1: eine Vorderansicht einer erfindungsgemässen Filterplatte gemäss einer ersten Ausführungsform,
- Fig. 2: einen Schnitt längs II-II in Fig. 1,
- Fig. 3: einen Schnitt längs III-III in Fig. 1,
- Fig. 4: einen Schnitt längs IV-IV in Fig. 1,
- Fig. 5: einen Schnitt längs V-V in Fig. 1,
- Fig. 6: vergrössert einen Ausschnitt aus Fig. 2,
- Fig. 7: eine Teilvorderansicht einer erfindungsgemässen Filterplatte gemäss einer zweiten Ausführungsform,
- Fig. 8: einen Schnitt längs VIII-VIII in Fig. 7 und
- Fig. 9: einen Schnitt längs IX-IX in Fig. 7.

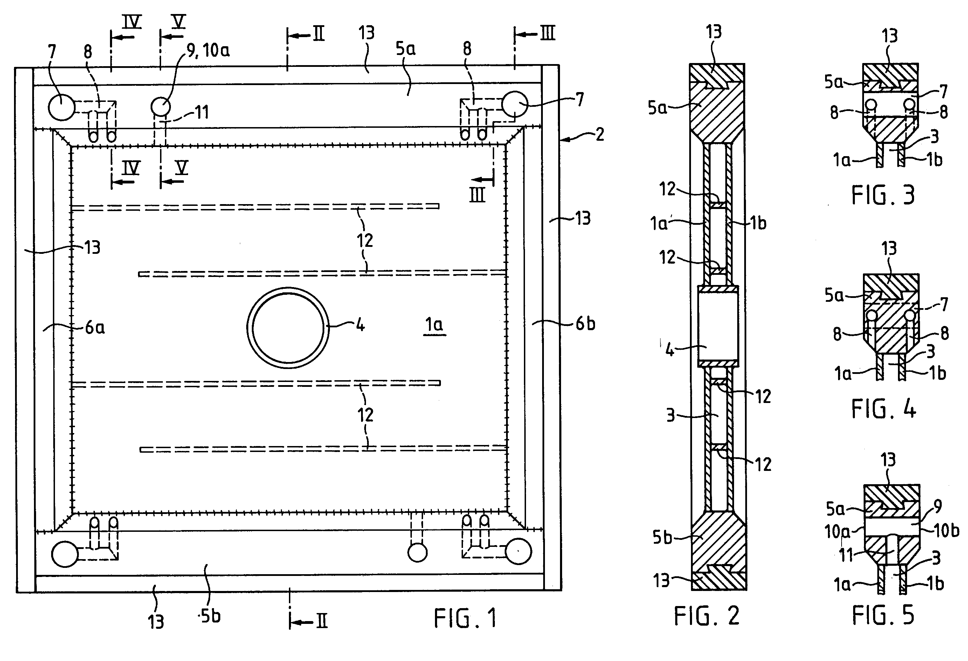

Gemäss einer ersten Ausführungsform besteht die Filterplatte (Fig. 1 - 6) aus zwei mit Abstand parallel zueinander angeordneten rechteckigen Platten 1a,b, welche von einem beidseits überstehenden rechteckigen Rahmen 2 umgeben sind, der einen zwischen den Platten 1a, 1b liegenden Hohlraum 3 am Umfang verschliesst. Im Zentrum sind die Platten 1a,b sowie der zwischen ihnen liegende Hohlraum 3 von einem Ring 4 durchbrochen, welcher einen Durchlass bildet.

Der Rahmen 2 besteht aus einem oberen Rahmenteil 5a und einem unteren Rahmenteil 5b sowie Seitenteilen 6a,b. Sämtliche Rahmenteile sind Metallprofile, die entweder in dieser Form im Handel erhältlich sind oder aus derartigen Teilen durch Hobeln oder andere Arten spanabhebender Bearbeitung mit wenig Aufwand herstellbar sind. Sie können aus Stahl oder Edelstahl bestehen. Die Seitenteile 6a,b sind gleich.

Sie sind massiv und bedürfen praktisch keiner Nachbearbeitung.

Der obere Rahmenteil 5a weist in den Endbereichen zwei gebohrte oder gefräste, senkrecht zur Rahmenebene durchgehende Abzugskanäle 7 auf. An jeden derselben schliessen zwei Abzugsbohrungen 8 an, welche sich ihrerseits weiter verzweigen und beidseits an den überstehenden Teilen der Rahmeninnenseite münden, d. h. den Abzugskanal 7 mit der durch das Ueberstehen des Rahmens 2 entstandenen Vertiefung, deren Grund die Platte 1a bzw. 1b bildet, verbinden. Ausserdem weist er einen Heizkanal 9 auf, welcher an der Rahmenoberfläche beidseits Heizöffnungen 10a,b (Fig. 5) bildet und von dem eine Heizbohrung 11 in den Hohlraum 3 abzweigt. Es ist auch möglich, auf den Abzugskanal 7 zu verzichten und die Abzugsbohrungen 8 bis zur Rahmenaussenfläche zu führen. Es muss dann allerdings für jede Filterplatte ein eigener Abzugsanschluss vorgesehen werden. Gleiches gilt für den Heizkanal 9. Die Heizöffnungen liegen dann an der Rahmenaussenfläche und müssen separat versorgt werden. Der untere Rahmenteil 5b entspricht exakt dem oberen Rahmenteil 5a, so dass der Rahmen 2 aus Teilen besteht, die nur zwei verschiedenen Typen angehören.

Zwischen den Platten 1a, 1b sind Trennwände 12 angeordnet, welche abwechselnd vom linken Seitenteil 6a und vom rechten Seitenteil 6b ausgehen und zwischen deren Enden und dem gegenüberliegenden Seitenteil 6b bzw. 6a ein Durchgang frei bleibt. Der Hohlraum 3 wird so in einen mäanderförmigen Gang abgeteilt, der die Mündung der oberen Heizbohrung 11 in den Hohlraum 3 mit der der unteren Heizbohrung 11 verbindet.

An der Aussenseite ist der Rahmen mit einer Isolationsschicht 13 aus sehr gut wärmeisolierendem und hitzebeständigem, beispielsweise aus Metalloxiden gesintertem Material verkleidet, das vorzugsweise in Profilform aufgeschoben und durch eine Nut-und-Feder-artige Verbindung mit dem Rahmen 2 verbunden ist. Entsprechende Materialien sind beispielsweise bei der Firma Insultech AG, CH-4812 Wangen bei Olten erhältlich.

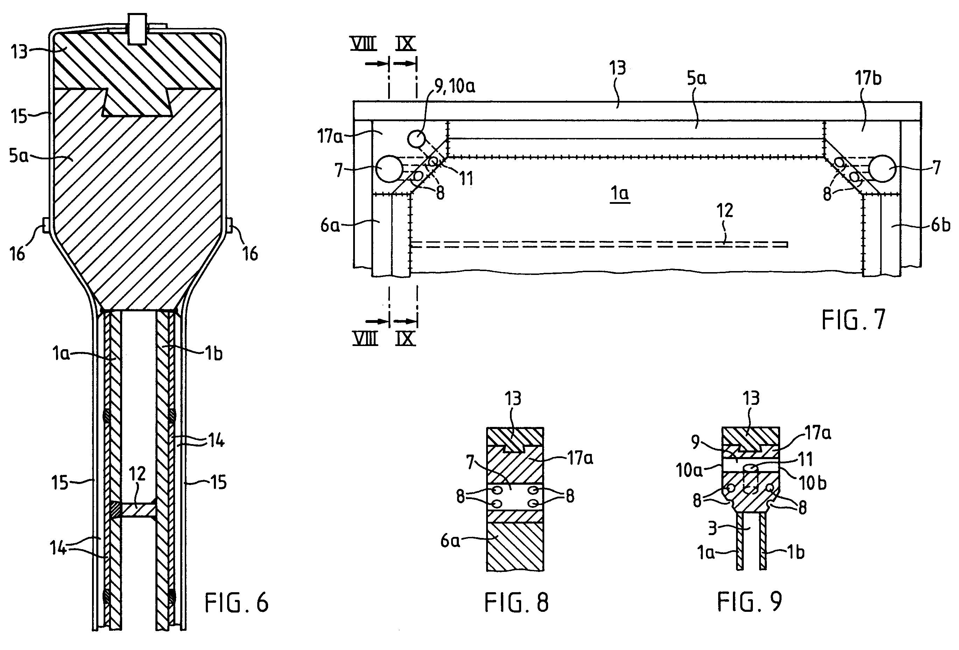

Die Platten 1a,b sind an der Aussenseite mit einem gerillten Blech 14 (Fig. 6), Warzenblech oder Metallgewebe, beispielsweise der Firma G. Bopp & Co. AG, Bachmannweg 20, CH-8046 Zürich, bedeckt und mit einem Filtertuch 15 bespannt. Für Anwendungen im Bereich bis 160°C kann dasselbe aus thermostabilisiertem Polyester bestehen, für höchste Temperaturen (bis 600°C) aus Metall-, vorzugsweise Stahlgewebe. Das Filtertuch 15 ist mit zwei jeweils im Bereich des inneren Randes des überstehenden Teils des Rahmens 2 umlaufenden komprimierbaren Dichtungen 16 versehen. Es ist im Bereich der Mündungen der Abzugskanäle 7 und der Heizöffnungen 10a,b von entsprechenden Löchern unterbrochen, die ebenfalls von Dichtungen umgeben sind. Die Filterplatte kann im Bereich der vom Rahmen 2 umgebenen Vertiefung zwecks gegenseitiger Abstützung benachbarter Filterplatten Stütznocken tragen.

Die Herstellung der beschriebenen Filterplatte ist wegen ihres an das Material und die zu seiner Verarbeitung zur Verfügung stehenden Methoden angepassten Aufbaus sehr einfach. Die Platten 1a,b werden auf die richtige Grösse zugeschnitten, anschliessend wird die Oeffnung für den Ring 4 ausgeschnitten und auf jede zwei Trennwände 12 aufgeschweisst. Zwei derart vorbereitete identische Platten werden verbunden, indem die Trennwände 12 der einen jeweils mit der anderen Platte verschweisst werden. Anschliessend wird der Ring 4 angebracht und mit beiden Platten 1a, 1b dicht verschweisst.

Die Rahmenteile werden aus Profilen abgelängt und falls erforderlich gehobelt. Anschliessend werden im oberen Rahmenteil 5a und im unteren Rahmenteil 5b durch spanabhebende Bearbeitung, insbesondere Fräsen und Bohren, die Abzugskanäle 7, Abzugsbohrungen 8, Heizkanäle 9 und Heizbohrungen 11 angelegt. Schliesslich werden sie mit den Seitenteilen 6a,b und den Platten 1a,b dicht verschweisst. Die Lage der Schweissnähte ist in Fig. 1, 2 und genauer in Fig. 6 angedeutet.

Die gerillten Bleche 14 werden nun ebenfalls zugeschnitten und mit den Platten 1a,b durch Punktschweissen verbunden. Falls erforderlich, wird nun der Rahmen 2 beidseits plangeschliffen. Schliesslich kann die Filterplatte zur Verbesserung ihrer Oberflächeneigenschaften, insbesondere ihrer Korrosionsfestigkeit verzinkt, vernickelt oder verchromt werden. Alternativ oder zusätzlich kann sie lackiert, emailliert oder beschichtet, z. B. pulversinterbeschichtet werden. Vor oder nach derartiger Oberflächenbehandlung können, vorzugsweise an den Seitenteilen 6a,b, Traggriffe montiert, z. B. durch die Isolationsschicht 13 hindurch angeschraubt werden.

Gemäss einer zweiten Ausführungsform (Fig. 7 - 9) umfasst die Filterplatte ebenfalls einen oberen Rahmenteil 5a und einen genau gleichen unteren Rahmenteil (nicht dargestellt) sowie zwei ebenfalls exakt gleiche Seitenteile 6a,b. Die Seitenteile 6a,b unterscheiden sich vom oberen Rahmenteil 5a und vom unteren Rahmenteil 5b höchstens in der Länge, bei einer quadratischen Filterplatte sind sie völlig gleich. Die Platten 1a,b mit den Trennwänden 12 entsprechen, von geringfügigen Abweichungen der Plattenform abgesehen, den entsprechenden Teilen gemäss der ersten Ausführungsform.

Der obere Rahmenteil 5a und der untere Rahmenteil sind beidseits mit den Seitenteilen 6a,b über Eckstücke 17a, 17b verbunden, wobei einander diamatral gegenüberliegende Eckstücke wiederum genau gleich sind. Das Eckstück 17a und das Eckstück 17b weisen jeweils einen Abzugskanal 7 mit vier horizontalen Abzugsbohrungen 8 auf, welche in den überstehenden Teilen der Rahmeninnenseiten münden. Sie sind insoweit gleich. Das Eckstück 17a links oben, dem, wie gesagt, das Eckstück rechts unten genau entspricht, ist jedoch ausserdem mit einem Heizkanal 9 und einer Heizbohrung 11, die in den Hohlraum 3 mündet, versehen. Auch hier könnte die Heizbohrung 11 bis zu einer an der Rahmenaussenfläche liegenden Heizöffnung geführt sein und der Heizkanal entfallen, Gleiches gilt für die Abzugsbohrungen 8. Aufgrund der Konzentration der Ab- und Zuleitungen in den Eckstücken 17a,b bedürfen der obere Rahmenteil 5a, der untere Rahmenteil 5b sowie die Seitenteile 6a,b nach dem Ablängen und allenfalls Hobeln keiner spanabhebenden Nachbearbeitung.

Die Filterplatte besteht aus nur vier oder fünf verschiedenen, teils sehr einfachen Typen von Teilen, wobei die Unterschiede teils äusserst gering sind. Die Herstellung ist weitgehend analog zu der der Filterplatte gemäss der ersten Ausführungsform. Schweissnähte zwischen vorgefertigten Teilen sind in Fig. 7 angedeutet.

Filterplatten der beschriebenen Art zeichnen sich nicht nur durch hohe Hitzebeständigkeit, sondern auch im gesamten Bereich möglicher Anwendungstemperaturen durch grosse mechanische Stabilität aus. Sie können nicht nur dazu eingesetzt werden, den Filterkuchen nach der Trennung vom Filtrat in der Kammerfilterpresse einer Kontakttrocknung zu unterziehen, indem über die Heizkanäle 9 und die Heizbohrungen 11 Heissluft oder Abgase (Rauchgase), Heisswasser, Wasserdampf, Oel oder Salz durch die Hohlräume 3 der Filterplatten geleitet wird, es ist auch möglich, den Filterkuchen zur Vakuum- oder Gefriertrocknung hohem Unterdruck bis zum Vakuum auszusetzen, indem die Kammerfilterpresse über die Abzugsbohrungen 8 und die Abzugskanäle 7 ausgepumpt wird. Während dies bei herkömmlichen Filterplatten aus Kunststoff, insbesondere Mebranplatten, kaum möglich ist, da sich dieselben ausbeulen und den Kuchen komprimieren, wodurch die Trocknung behindert wird, sind erfindungsgemässe Filterplatten praktisch völlig starr.

Die erreichbaren Temperaturen hängen, wie schon erwähnt, vor allem vom Material der Filtertücher ab. Bei Verwendung von Stahltüchern sind 600°C erreichbar. Wegen der Isolationsschicht steigt dabei die Aussentemperatur der Kammerfilterpresse kaum je über 70°C. Selbstverständlich können die Filterplatten auch gekühlt werden. Auch in diesem Fall sorgt die Isolationsschicht dafür, dass die Aussentemperatur nicht kritisch wird.

## Patentansprüche

1. Filterplatte aus Metall für eine Kammerfilterpresse, mit zwei mit Abstand parallel angeordneten Platten (1a, 1b), welche zusammen mit einem sie umgebenden, quer zur Plattenebene überstehenden Rahmen (2) einen Hohlraum (3) umschliessen, der mit mindestens einer Heizöffnung (10a, 10b) im Rahmen (2) verbunden ist, **dadurch gekennzeichnet**, **dass** der Rahmen (2) rechteckig ist, aus mehreren durch Schweissnähte verbundenen Rahmenteilen besteht und mit den Platten (1a, 1b) gleichfalls durch Schweissnähte verbunden ist.

2. Filterplatte nach Anspruch 1, **dadurch gekennzeichnet**, **dass** die Rahmenteile mindestens zum Teil als Profilstücke ausgebildet sind.

3. Filterplatte nach Anspruch 1 oder 2, **dadurch gekennzeichnet**, **dass** der Rahmen (2) einen oberen Rahmenteil (5a) und einen unteren Rahmenteil (5b) umfasst, welche gleich sind sowie zwei Seitenteile (6a, 6b), welche ebenfalls gleich sind.

4. Filterplatte nach Anspruch 3, **dadurch gekennzeichnet**, **dass** der obere Rahmenteil (5a) und der untere Rahmenteil (5b) jeweils mindestens einen quer zur Plattenebene durchgehenden, durch spanabhebende Bearbeitung hergestellten Abzugskanal (7) aufweisen, von welchem mindesten eine Abzugsbohrung (8) ausgeht, die an der Innenseite des überstehenden Teils des Rahmens (2) mündet sowie mindestens einen quer zur Plattenebene durchgehenden, ebenfalls durch spanabhebende Bearbeitung hergestellten Heizkanal (9), welcher beidseits Heizöffnungen (10a, 10b) bildet und von welchem eine Heizbohrung (11) ausgeht, die in den Hohlraum (3) zwischen den Platten (1a, 1b) mündet, während die Seitenteile (6a, 6b), von allfälliger Oberflächenbehandlung abgesehen, nicht nachbearbeitet sind.

5. Filterplatte nach Anspruch 3, **dadurch gekennzeichnet**, **dass** sie vier Eckteile (17a, 17b) umfasst, durch welche der obere Rahmenteil (5a) und der untere Rahmenteil (5b) mit den Seitenteilen (6a, 6b) verbunden sind.

6. Filterplatte nach Anspruch 5, **dadurch gekennzeichnet**, **dass** die Eckteile (17a, 17b) zu höchstens zwei verschiedenen Typen gehören.

7. Filterplatte nach Anspruch 5 oder 6, **dadurch gekennzeichnet**, **dass** die Eckteile (17a, 17b) mindestens einen quer zur Plattenebene durchgehenden, durch spanabhebende Bearbeitung hergestellten Abzugskanal (7) aufweisen, von welchem mindesten eine Abzugsbohrung (8) ausgeht, die an der Innenseite des überstehenden Teils des Rahmens (2) mündet sowie mindestens einen quer zur Plattenebene durchgehenden, ebenfalls durch spanabhebende Bearbeitung hergestellten Heizkanal (9), welcher beidseits Heizöffnungen (10a, 10b) bildet und von welchem mindestens eine Heizbohrung (11) ausgeht, die in den Hohlraum (3) zwischen den Platten (1a, 1b) mündet, während der obere Rahmenteil (5a), der untere Rahmenteil (5b) und die Seitenteile (6a, 6b), von allfälliger Oberflächenbehandlung abgesehen, nicht nachbearbeitet sind.

8. Filterplatte nach einem der Ansprüche 1 bis 7, **dadurch gekennzeichnet**, **dass** der Hohlraum (3) im oberen Bereich und im unteren Bereich jeweils mit einer Heizöffnung (10a, 10b) verbunden ist und dass er mehrere mindestens annähernd horizontale Trennwände (12) aufweist, welche seitlich abwechselnd Durchgänge offenlassen, so dass er einen mäanderförmigen Gang bildet.

9. Filterplatte nach einem der Ansprüche 1 bis 8, **dadurch gekennzeichnet**, **dass** der Rahmen (2) an der Aussenseite mit einer wärmeisolierenden Schicht (13) verkleidet ist.

10. Filterplatte nach einem der Ansprüche 1 bis 9, **dadurch gekennzeichnet**, **dass** sie mit einem Filtertuch (15) aus Metallgewebe bespannt ist.
